# EUROPÄISCHE PATENTSCHRIFT

(11) **EP 2 422 606 B1**
(45) Veröffentlichungstag und Bekanntmachung des Hinweises auf die Patenterteilung: **10.09.2014**
(21) Anmeldenummer: 11172297.1
(22) Anmeldetag: 01.07.2011
(51) Int. Cl.: A01D 41/14, A01D 61/00

(54) **Schneidwerk**
Cutting assembly
Barre de coupe

(30) Priorität: 24.08.2010 DE 102010037131
(43) Veröffentlichungstag der Anmeldung: 29.02.2012
(73) Patentinhaber: CLAAS Selbstfahrende Erntemaschinen GmbH, 33428 Harsewinkel (DE)
(72) Erfinder: Füchtling, Christian, 59387 Ascheberg (DE)

(56) Entgegenhaltungen:
- EP-A2- 2 138 029
- US-A- 2 438 065
- US-B2- 7 478 521

## Beschreibung

Die Erfindung betrifft ein Schneidwerk gemäß dem Oberbegriff des Patentanspruches 1.

Ein Schneidwerk der eingangs genannten Art ist aus der US 7,478,521 B2 bekannt, welches einen an einem Rahmen angeordneten Mittenabschnitt und mindestens zwei benachbart zu dem Mittenabschnitt an dem Rahmen angeordnete Seitenabschnitte aufweist, welche einen flexiblen Messerbalken sowie zumindest eine hinter dem Messerbalken angeordnete Fördervorrichtung umfassen. Die Fördervorrichtung ist auf den jeweiligen Seitenabschnitten als mindestens ein endloses Band ausgeführt, das benachbart zu dem Mittenabschnitt angeordnet ist, um von dem Messerbalken abgeschnittenes Erntegut parallel zur Längsachse des Schneidwerkes in Richtung des Mittenabschnittes zu transportieren. Der Mittenabschnitt ist mit einem Förderband versehen, welches quer zur Längsachse des Schneidwerkes umläuft, um das von den seitlichen Querförderbändern übergebene Erntegut einem Einzugskanal eines Mähdreschers zuzuführen, an dem das Schneidwerk anbringbar ist. Bei diesem Schneidwerk werden der Messerbalken sowie die endlosen Bänder der Seitenabschnitte gemeinsam von parallel zueinander angeordneten, in einer Ebene liegenden Schwebearmen getragen, die an einem Hauptrahmen des Schneidwerkes um eine einzige gemeinsame Schwenkachse drehbar angeordnet sind, um einen Ausgleich von Bodenunebenheiten durch eine partielle Auslenkung des Schneidwerkes zu ermöglichen. Nachteilig bei diesem Schneidwerk ist es, dass bei einer vertikalen Auslenkung eines oder mehrerer der Schwebearme das Band abschnittsweise in Richtung des Hauptrahmens gedrückt wird, weil die Schwenkachse der Schwebearme vom Band weit beabstandet ist. Durch das Bewegen des Bandes in horizontaler Richtung in Folge der großen Beabstandung zur Schwenkachse nimmt der Verschleiß des Bandes zu. Die partielle Auslenkung des Bandes durch den sich gegenüber den benachbarten Schwebearmen in seiner Position verändernden Schwebarm erschwert zudem die Führung des Bandes, da das Band, welches um quer zu der Schwenkachse des Schwebearmes verlaufende Walzen oder Rollen zumindest angetrieben und geführt wird, gegenüber diesen in seiner Position verändert wird. Die durch die vertikale Auslenkung eines einzelnen oder mehrerer Schwebearme hervorgerufene partielle Auslenkung des Bandes führt dazu, dass das Band sowohl in vertikaler als auch in horizontaler Richtung ausgelenkt wird, wodurch die Führung des Bandes in diesem Bereich für die Dauer der Auslenkung negativ beeinflusst wird.

Aus der EP 2 138 029 A2 ist ein Schneidwerk gemäß dem Oberbegriff des Anspruches 1 bekannt. Gegenstand der EP 2 138 029 A2 ist eine Vereinfachung der Auswechselbarkeit des Förderbandes eines Seitenabschnittes, was dadurch erreicht wird, dass die das Band tragenden Rollen, die auf den jeweiligen Tragarmen befestigt sind, an ihrem einem Ende um eine Schwenkachse drehbar an dem jeweiligen Tragarme angelenkt sind, und an ihrem anderen Ende lösbar mit dem ieweiligen Tragarm verbunden sind. Zum Austausch eines Förderbandes werden die Rollen aus ihrer Betriebsposition, in der sie sich parallel zum jeweiligen Tragarm erstrecken, durch Schwenken um die Schwenkachse in eine Position überführt, in der sie mit dem jeweiligen Tragarm eine Winkel einschließen, wodurch das Förderband in einfacher Weise von den Rollen abziehbar beziehungsweise aufschiebbar ist.

Der Erfindung liegt die Aufgabe zu Grunde, ein Schneidwerk der eingangs genannten bereitzustellen, das flexibel auf Bodenunebenheiten reagiert, wobei eine sichere und verschleißarme Führung der Bänder sowie eine optimale Bodenanpassung des Messerbalkens gegeben ist.

Diese Aufgabe wird durch die im Patentanspruch 1 genannten kennzeichnenden Merkmale gelöst.

Weitere vorteilhafte Ausführungen des Erfindungsgegenstandes ergeben sich aus den nachgeordneten Ansprüchen.

Gemäß dem Anspruch 1 wird vorgeschlagen, dass die Tragarme des jeweiligen Seitenabschnittes den Messerbalken tragen und dass mindestens ein Tragelement vorgesehen ist, welches das mindestens eine Band trägt, so dass bei einer vertikalen Auslenkung zumindest eines Tragarmes dieser und das mindestens eine Tragelement unabhängig voneinander bewegbar sind. Durch die Entkopplung der Funktionen des Tragens des Messerbalkens durch die Tragarme einerseits und des

Tragens der als Bänder ausgeführten Fördervorrichtung auf den Seitenabschnitten andererseits, bleibt bei einer vertikalen Auslenkung eines oder mehrerer benachbarter Tragarme die Führung des Bandes wie auch das Band selbst in diesem Bereich weitgehend unbeeinträchtigt, da das Tragelement gegenüber den Tragarmen relativ zu diesen bewegbar ist. Das Tragelement wird ebenfalls vertikal ausgelenkt und mit diesem die das Band antreibenden und führenden Elemente. Das Band wird dabei, im Gegensatz zu dem eingangs genannten Stand der Technik, nur geringfügig horizontal ausgelenkt, um der Bewegung des Schwebearmes folgen zu können.

Um die Entkopplung der Funktionen des Tragens des Messerbalkens durch die Tragarme einerseits und des Tragens der als Bänder ausgeführten Fördervorrichtung auf den Seitenabschnitten andererseits zu erreichen, sollten die Tragarme und das mindestens eine Tragelement jeweils um separate Schwenkachsen schwenkbar an dem Grundrahmen angelenkt sein.

Dabei kann das mindestens eine Tragelement als eine Vielzahl von parallel zu den den Messerbalken tragenden Tragarmen angeordneten Stützarmen ausgeführt sein. Diese können in der Vertikalen mit den Tragarmen fluchtend angeordnet sein. Ebenso können die Stützarme auch in horizontaler Richtung des Seitenabschnittes gesehen seitlich versetzt zu den Tragarmen angeordnet sein.

In bevorzugter Weiterbildung kann das mindestens eine Tragelement stabwerkartig ausgeführt sein. Hierdurch lässt sich eine optimale Bandführung erreichen, da eine kontinuierliche Bandauflage ohne Unterbrechungen gewährleistet ist. Weiterhin wird durch die stabwerkartige Ausführung des Tragelementes die Bandführung dahingehend verbessert, dass kein mittiges Durchbiegen von auf der Oberfläche des Bandes vorgesehenen Förderrippen auftritt, weil das Band an nahezu jeder Stelle auf dem stabwerkartig ausgeführten Tragelement aufliegt. Ein weiterer Vorteil besteht in der Vereinfachung der stirnseitigen Abdichtung des Überganges zwischen Messerbalken und Band.

Dazu können mindestens zwei Stützarme eines Seitenabschnittes durch mindestens einen Querträger miteinander verbunden sein. Hierbei kann mindestens ein Querträger sich im Wesentlichen über die gesamte Breite des Seitenabschnittes erstrecken und dabei alle Stützarme des Seitenabschnittes miteinander verbinden. Um die erforderliche Flexibilität für eine horizontale Ausgleichsbewegung des mindestens einen Querträgers zu gewährleisten, ist dieser beispielsweise aus einem elastischen Material wie Kunststoff oder Gummi ausgeführt, oder als eine Metallschiene mit entsprechender Elastizität, die nur an einer Stelle des jeweiligen Seitenabschnittes fixiert ist, so dass der als Metallschiene ausgeführte Querträger in horizontaler Richtung eine Relativbewegung gegenüber den Stützarmen ausüben kann. Es sind auch weitere konstruktive Maßnahmen und Ausgestaltungen des mindestens einen Querträgers denkbar, um bei einer partiellen vertikalen Auslenkung des Seitenabschnittes für die notwendige Flexibilität des mindestens einen Querträgers zu sorgen.

Alternativ kann eine Vielzahl von Querträgern vorgesehen sein, die jeweils zumindest zwei benachbart nebeneinander angeordnete Stützarme miteinander verbinden. Dabei können die einzelnen Querträger in Längsrichtung des Seitenabschnittes fluchtend oder über die Breite des Seitenabschnittes versetzt hintereinander angeordnet sein. Zur Erreichung der erforderlichen Flexibilität für eine horizontale Ausgleichsbewegung ist auch die Vielzahl von Querträgern in entsprechender Weise ausgeführt wie es zuvor bei den durchgehenden Querträgern beschrieben ist.

Vorzugsweise können die Tragarme Mittel zur Reduzierung der von dem Messerbalken auf den Boden ausgeübten Gewichtskraft aufweisen. Hinter dem Messerbalken ist auf der dem Boden zugewandten Seite des Schneidwerkes eine Vielzahl von Gleitkufen an dem Messerbalken angeordnet, die den Boden abtasten, um dessen Verlauf zu kopieren. Der Bodenverlauf wird von den Gleitkufen auf den Messerbalken übertragen, der dem Verlauf durch entsprechende vertikale Ausgleichsbewegungen folgt. Die Mittel zur Reduzierung der Gewichtskraft können beispielsweise als Federn oder Hydraulikzylinder ausgeführt sein und dienen dazu, dass die über Gleitkufen, welche zum Abtasten und Kopieren des Bodens verwendet werden, auf den Boden aufgebrachten Gewichtskräfte zu reduzieren, um zu vermeiden, dass der Messerbalken Erdreich vor sich herschiebt.

Insbesondere können die Tragarme und das mindestens eine Tragelement durch zumindest ein Schubgelenk miteinander verbunden sein. Hierdurch wird einerseits die Relativbewegung zwischen den Tragarmen und dem mindestens einen Tragelement erreicht, andererseits dient das Schubgelenk auch der gegenseitigen Führung des Tragarmes und des mindestens einen Tragelementes.

Des Weiteren kann der Mittenabschnitt eine Einzugsschnecke sowie eine Bodenplatte mit einem darauf angeordneten Leitelement umfassen, wobei die Bodenplatte schwenkbar an dem Grundrahmen angeordnet ist. Die schwenkbar am Grundrahmen angelenkte Bodenplatte ermöglicht einen flacheren Aufbau des Schneidwerkes und somit einen besseren, verlustfreieren Materialfluss des Ernteguts. Das auf der Bodenplatte befindliche Leitelement ermöglicht in Verbindung mit der Einzugsschnecke einen direkten, zwangsgeführten Einzug des Ernteguts, wodurch sich der Mittenabschnitt auch für hohe Erntegutmengen eignet.

Alternativ kann der Mittenabschnitt eine als Einzugsband ausgeführte Einzugsvorrichtung umfassen, welches quer zu der Förderrichtung der seitlichen Bänder das Erntegut abfördert.

Vorteilhafterweise kann die Schwenkachse des Tragarmes achsparallel zu der Schwenkachse des mindestens einen Tragelementes angeordnet sein. Gegenüber einer koaxialen Anordnung der Schwenkachsen hat die achsparallele Anordnung den Vorteil, dass sich die Position der Schwenkachse des den Messerbalken tragenden Tragarmes mit einem geringen Abstand zum Boden wählen lässt, so dass die Kraftlinie zwischen dem Messerbalken und der Schwenkachse in einem möglichst flachen Winkel zum Boden verläuft. Für die Position der Schwenkachse des Tragelementes ergibt sich der Vorteil, dass sich die Schwenkachse geringfügig beabstandet hinter der Fördervorrichtung befindet, so dass sich das Band auf seiner dem Grundrahmen zugewandten Seite bei einer Ausgleichsbewegung nur geringfügig bewegt, wodurch die Bandführung erheblich verbessert und eine horizontale Auslenkung des Bandes bei einer vertikalen Auslenkung des Tragelementes weitgehend vermieden wird.

Insbesondere kann zur Führung des Bandes das mindestens eine Tragelement eine zum Grundrahmen achsparallel verlaufende Nut aufweisen, in die ein mit der Form der Nut korrespondierender, umlaufender Vorsprung auf der Innenseite des Bandes eingreift.

Vorzugsweise kann die Nut unmittelbar zu der oberen Schwenkachse benachbart angeordnet sein. Diese Anordnung hat den Vorteil, dass bei einer vertikalen Auslenkung zumindest eines der Tragelemente das Band an seiner dem Grundrahmen zugewandten Seite nur geringfügig in seiner horizontalen Position verändert wird, wodurch die Stabilität der im Wesentlichen formschlüssigen Führung durch die Nut in dem mindestens einen Tragelement und dem Vorsprung an dem Band nicht beeinträchtigt wird.

Zur Verbesserung der Führung kann sich die Nut nahezu unterbrechungsfrei über die Breite des jeweiligen Seitenabschnittes erstrecken.

Die Erfindung wird nachstehend an in den Zeichnungen dargestellten Ausführungsbeispielen näher erläutert.

In den zugehörigen Zeichnungen zeigen:
- Fig. 1: eine Ansicht auf ein schematisch dargestelltes Schneidwerk von oben;
- Fig. 2.: eine Ansicht des Schneidwerkes gemäß Fig.1 von unten;
- Fig. 3.: eine perspektivische Ansicht des Schneidwerkes gemäß Fig. 1 in einer ersten Ausführungsform;
- Fig. 4: eine perspektivische Ansicht des Schneidwerkes gemäß Fig. 1 in einer zweiten Ausführungsform;
- Fig. 5: eine perspektivische Ansicht des Schneidwerkes gemäß Fig. 1 in einer dritten Ausführungsform.

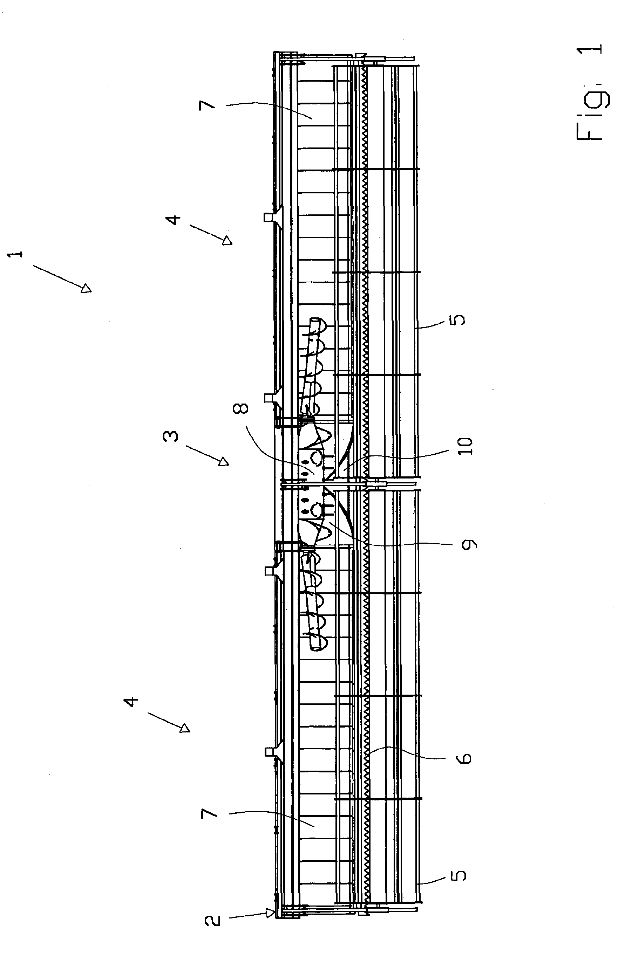

In Fig. 1 ist eine schematische Ansicht auf ein Schneidwerk 1 von oben dargestellt. Das Schneidwerk 1 weist einen Grundrahmen 2 auf, an welchem ein Mittenabschnitt 3 und mindestens zwei benachbart zu dem Mittenabschnitt 3 angeordnete Seitenabschnitte 4 angeordnet sind. An dem Mittenabschnitt 3 und den Seitenabschnitten 4 ist auf der dem Grundrahmen 2 gegenüberliegenden Vorderseite des Schneidwerkes 1 ein durchgehender, flexibler Messerbalken 6 angeordnet, der sich nahezu über die gesamte Bereite des Schneidwerkes 1 erstreckt. An dem Grundrahmen 2 des Schneidwerkes 1 sind Haspeln 5 angeordnet, die sich über die Breite eines Seitenabschnittes 4 sowie teilweise über die Breite des Mittenabschnittes 3 erstrecken. Die Haspeln 5 dienen der Verbesserung der Annahme des Erntegutes durch den Messerbalken 6. Das von dem Messerbalken 6 abgetrennte Erntegut wird einer hinter dem Messerbalken 6 angeordneten Fördervorrichtung zugeführt, die auf den jeweiligen Seitenabschnitten 4 als mindestens ein endlos umlaufendes Band 7 ausgeführt ist. Die endlos umlaufenden Bänder 7 sind benachbart zu dem Mittenabschnitt 3 angeordnet, um das von dem Messerbalken 6 abgeschnittene Erntegut parallel zu der Längsachse des Schneidwerkes 1 in Richtung des Mittenabschnittes 3 zu transportieren und einer Einzugsvorrichtung zuzuführen. Der Mittenabschnitt 3 weist eine als antreibbare Einzugsschnecke 8 ausgeführte Einzugsvorrichtung auf, die das von den endlosen Bändern 7 dem Mittenabschnitt 3 seitlich zugeführte Erntegut einer in dem Grundrahmen 2 vorgesehenen, hinter der Einzugsschnecke 8 angeordneten Öffnung zuführt, durch welche das Erntegut durch einen an einem nicht dargestellten Mähdrescher befindlichen Einzugskanal, an dem das Schneidwerk 1 befestigbar ist, dem Mähdrescher zur weiteren Verarbeitung übergeben wird.

Der Mittenabschnitt 3 umfasst eine Bodenplatte 9, die auf ihrer der oberhalb der Bodenplatte 9 angeordneten Einzugsschnecke 8 zugewandten Oberseite konturiert ausgeführt ist, während die gegenüberliegende Unterseite der Bodenplatte 9 im Wesentlichen eben ausgeführt ist. Die konturierte Oberseite der Bodenplatte 9 weist einen keilförmigen, erhabenen Vorsprung 10 auf. Der Vorsprung 10 ist von der Vorderkante des Schneidwerkes 1 ausgehend sich in Richtung der Einzugsschnecke 8 verjüngend ausgeführt und mündet in einer der Einzugsschnecke 8 zugewandten Spitze. Der Vorsprung 10 dient der zwangsgeführten Gutumlenkung, um das von den Bändern 7 bereitgestellte Erntegut in den Einzugsbereich der Einzugsschnecke 8 umzulenken. Die Höhe des Vorsprunges 10 kann dabei variieren, um eine ausreichende Gutumlenkung zu sichern. Hierdurch wird das abgeschnittene Erntegut, welches dem Mittenabschnitt 3 durch die Bänder 7 der Seitenabschnitte 4 seitlich zugeführt wird, in Richtung der Einzugsschnecke 8 zwangsgeführt umgelenkt, um die Gutannahme zu verbessern.

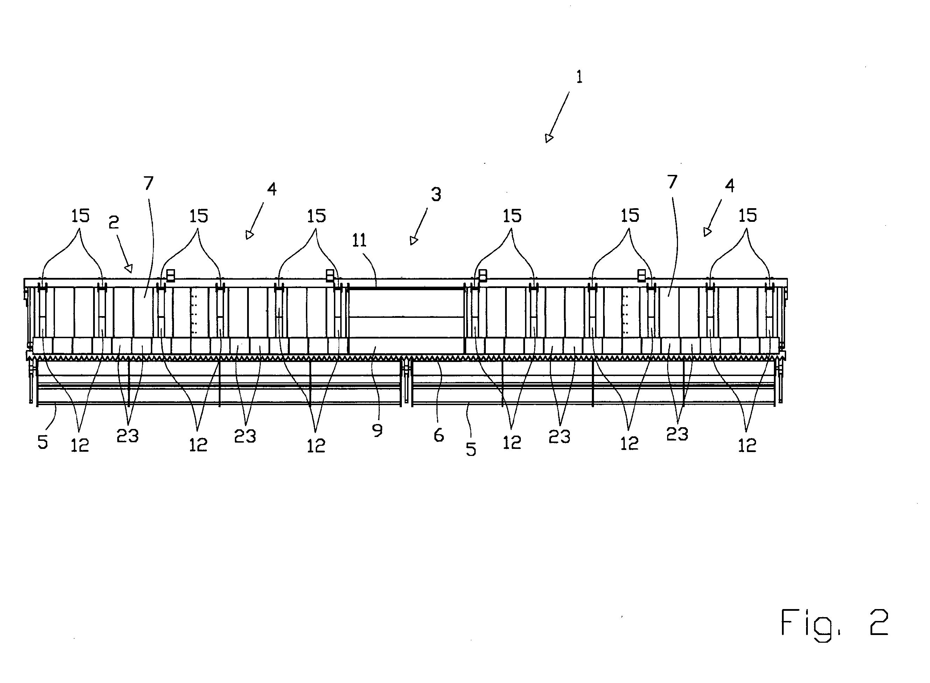

Die Darstellung in Fig. 2 zeigt das Schneidwerk 1 gemäß Fig. 1 in einer Ansicht von unten. Die konturierte Bodenplatte 9 ist auf ihrer Unterseite im Wesentlichen eben ausgeführt. Die Bodenplatte 9 ist um eine zur Längsachse des Schneidwerkes 1 achsparallele Achse 11 an dem Grundrahmen 2 schwenkbar angelenkt, so dass die Bodenplatte 9 nur über ihre vollständige Breite in vertikaler Richtung auslenkbar ist. Weiterhin zeigt die Darstellung in Fig. 2, dass die Seitenabschnitte 4 eine Vielzahl von schwenkbar an dem Grundrahmen 2 angelenkten Tragarmen 12 aufweisen, die an ihren dem Grundrahmen 2 abgewandten Enden den Messerbalken 6 tragen. Parallel zu dem Messerbalken 6 ist eine Vielzahl von Gleitkufen 23 an den jeweiligen Seitenabschnitten 4 angeordnet, die den Boden abtasten und somit den Verlauf des Bodens kopieren. Durch die Gleitkufen 23 werden auftretende Bodenunebenheiten erfasst und auf den Messerbalken 6 übertragen, der auf Grund der schwenkbaren Anlenkung der Tragarme 12 an dem Grundrahmen 2 zumindest abschnittsweise eine Auslenkung in vertikaler Richtung erfährt, um dem Verlauf der Bodenunebenheiten folgen zu können.

Erfindungsgemäß ist vorgesehen, dass die Tragarme 12 des jeweiligen Seitenabschnittes 4 den Messerbalken 6 tragen, während die endlosen Bänder 7 der Seitenabschnitte 4 von mindestens einem zusätzlichen Tragelement 13 getragen werden so dass der Messerbalken 6 unabhängig von dem endlosen Bänder 7 des entsprechenden Seitenabschnittes 4 bewegbar ist. Durch die Entkopplung der Funktionen des Tragens des Messerbalkens 6 durch die Tragarme 12 einerseits und des Tragens der als Bänder 7 ausgeführten Fördervorrichtung auf den Seitenabschnitten 4 durch das mindestens eine Tragelement 13 andererseits, bleibt bei einer vertikalen Auslenkung eines oder mehrerer benachbarter Tragarme 12 die Führung des Bandes 7 in diesem Bereich weitgehend unbeeinträchtigt, da das Tragelement 13 gegenüber den Tragarmen 12 relativ bewegbar ist.

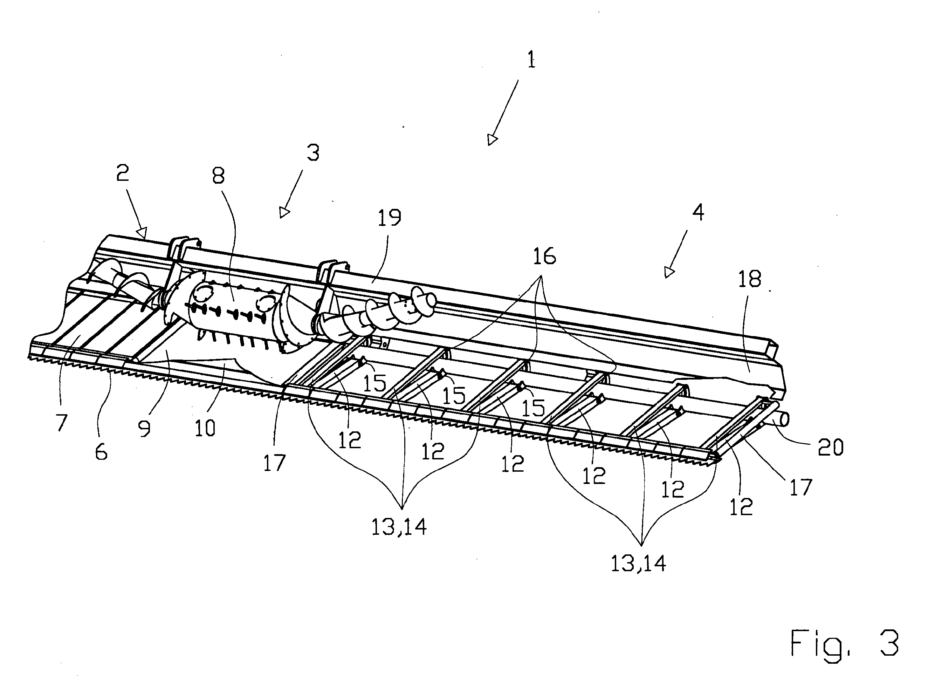

Die Darstellung in Fig. 3 zeigt eine perspektivische Ansicht des Schneidwerkes 1 gemäß Fig. 1 in einer ersten Ausführungsform. In der Darstellung gemäß Fig. 3 ist ein Seitenabschnitt 4 des Schneidwerkes 1 teilweise freigeschnitten, um die unterhalb des Bandes 7 befindliche Struktur des Schneidwerkes 1 zu verdeutlichen. Wie aus der der Fig. 3 ersichtlich ist, weist der Grundrahmen 2 eine sich vertikal zur Bewegungsrichtung der Bänder 7 erstreckende Rückwand 18 auf, die zwischen zwei vorzugsweise hohlzylindrischen Profilelementen 19, 20 eingefasst ist. Im Mittenabschnitt 3 ist die antreibbare Einzugsschnecke 8 an den Profilelementen 19, 20 des Grundrahmens 2 gehaltert.

Bei der ersten Ausführungsform des erfindungsgemäßen Schneidwerkes 1 gemäß Fig. 3 ist das Tragelement 13 als eine Vielzahl von separaten Stützarmen 14 ausgeführt. Die Stützarme 14 sind parallel zu den Tragarmen 12, vorzugsweise unmittelbar über diesen in vertikaler Richtung fluchtend, paarweise angeordnet. Dabei sind die paarweise angeordneten Tragarme 12 und die Stützarme 14 jeweils um eine separate untere Schwenkachse 15 und obere Schwenkachse 16 schwenkbar am Grundrahmen 2 angelenkt. Die untere Schwenkachse 15 und die obere Schwenkachse 16 sind zueinander beabstandet an dem Grundrahmen angeordnet. Die obere Schwenkachse 16 ist unmittelbar benachbart zum Band 7 angeordnet. Zumindest an den endseitig der Seitenabschnitte 4 angeordneten Stützarmen 14 sind aktiv angetriebene oder passive Umlenkrollen 17 angeordnet, die das jeweilige endlos umlaufende Band 7 eines Seitenabschnittes 4 antreiben beziehungsweise führen. Das jeweilige Band 7 eines Seitenabschnittes 4 umschließt dabei nur die Stützarme 14, so dass eine vertikale Auslenkung eines oder mehrerer Tragarme 12 um die untere Schwenkachse 15 die Führung des parallel dazu verlaufenden, von den um die obere Schwenkachse 16 verschwenkbaren Stützarmen 14 getragenen Bandes 7 weitgehend unbeeinflusst lässt.

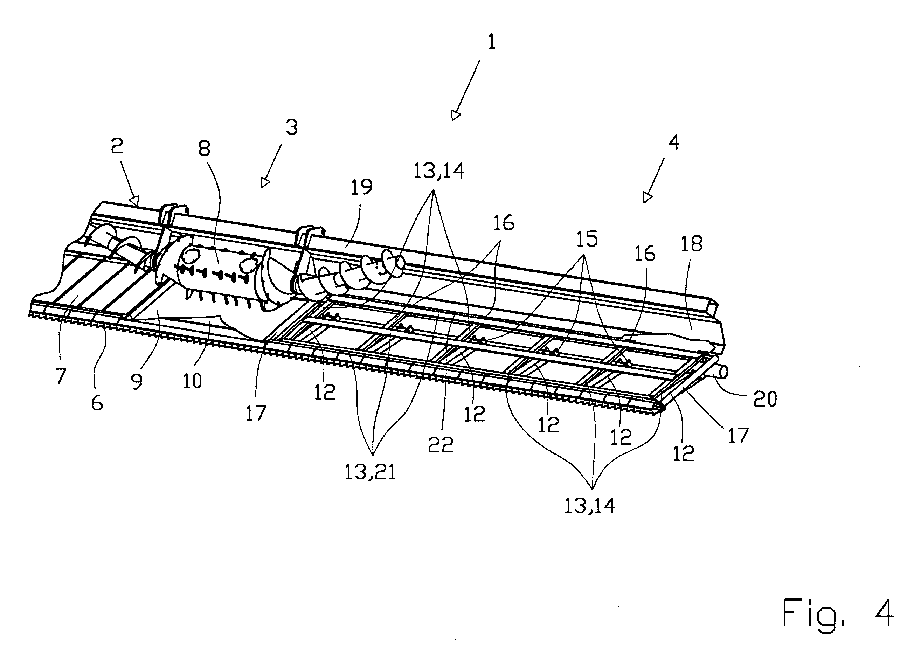

In Fig. 4 ist eine perspektivische Ansicht eines Schneidwerkes 1 gemäß Fig. 1 in einer zweiten Ausführungsform dargestellt. Diese Ausführungsform unterscheidet sich von der gemäß Fig. 3 dadurch, dass das mindestens eine Tragelement 13 stabwerkartig ausgeführt ist. Hierzu sind die Stützarme 14 eines Seitenabschnittes 4 durch mindestens einen Querträger 21 miteinander verbunden, der sich im Wesentlichen über die gesamte Breite des Seitenabschnittes 4 des Schneidwerkes 1 erstreckt. In dem dargestellten Ausführungsbeispiel sind mehrere Querträger 21 parallel zueinander auf den Stützarmen 14 des Seitenabschnittes 4 angeordnet, die eine Art Tisch bilden, der das Band 7 trägt und auf dem das Band 7 großflächig aufliegt, so dass sich eine kontinuierliche Auflage des Bandes 7 auf dem stabwerkartigen Tragelement 13 ergibt. Die Führung des Bandes 7 erfolgt durch eine durchgehende Nut 22, die unmittelbar benachbart zu der oberen Schwenkachse 16 auf dem Querträger 21 angeordnet ist. In die durchgehende Nut 22 greift ein auf der den Stützarmen 14 zugewandten Innenseite des Bandes 7 angeordneter umlaufender, mit der Form der Nut 22 korrespondierender Vorsprung ein.

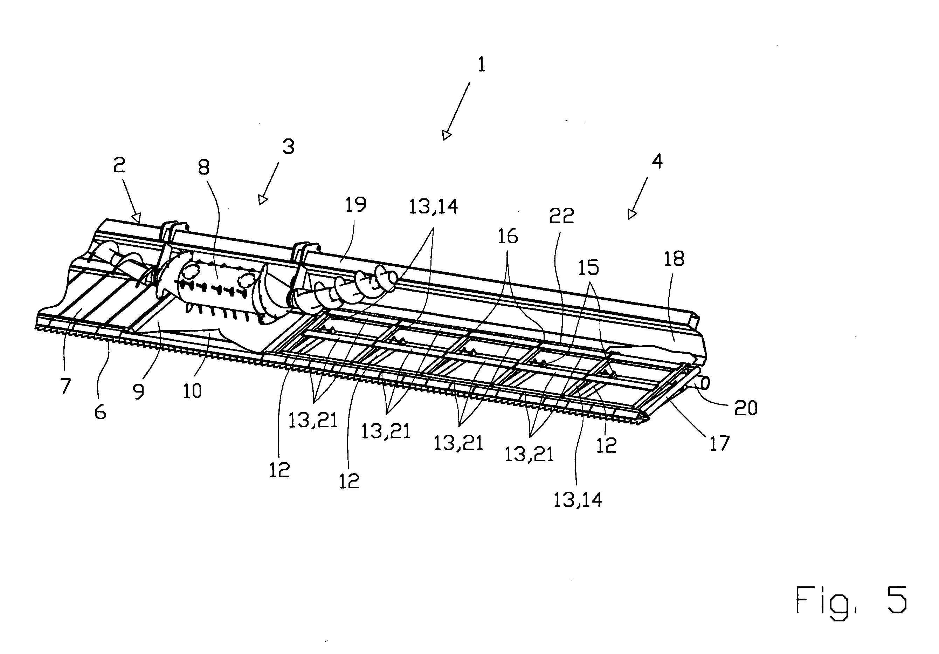

Fig. 5 zeigt eine perspektivische Ansicht des Schneidwerkes 1 gemäß Fig. 1 in einer dritten Ausführungsform. Bei dieser Ausführungsform sind mehrere, achsparallel zu dem Grundrahmen 2 angeordnete Querträger 21 vorgesehen, wobei ein Querträger 21 zumindest jeweils zwei benachbarte Stützarme 14 miteinander verbindet. Einzelne Querträger 21 sind vorzugsweise in einer Reihe hintereinander angeordnet, so dass sich eine dem zweiten Ausführungsbeispiel entsprechende Anordnung mit einem durchgehenden Querträger 21 ergibt. Ebenso können die einzelnen Querträger 21 in Längsrichtung des Schneidwerkes 1 gesehen versetzt zueinander angeordnet sein. Die Führung des Bandes 7 erfolgt in der für die zweite Ausführungsform beschriebenen Weise. Hierbei ist eine Vielzahl von Querträgern 21 parallel zu der oberen Schwenkachse 16 fluchtend hintereinander angeordnet. Die Querträger 21 weisen jeweils eine Nut 22 auf, die auf Grund der fluchtenden Annordnung der Querträger 21 eine durchgehende, nahezu unterbrechungsfreie Nut 22 bilden, wie sie im ersten Ausführungsbeispiel ausgebildet ist. Die Durchgängigkeit der Nut 22 vereinfacht die Führung des Bandes 7.

Allen Ausführungsformen ist gemeinsam, dass die untere Schwenkachse 15 des Tragarmes 12 achsparallel zu der oberen Schwenkachse 16 des mindestens einen Tragelementes 13 angeordnet ist. Gegenüber einer koaxialen Anordnung der Schwenkachsen 15, 16 hat die achsparallele Anordnung den Vorteil, dass sich die Position der unteren Schwenkachse 15 des den Messerbalken 6 tragenden Tragarmes 12 mit einem geringen Abstand zum Boden wählen lässt, so dass die Kraftlinie zwischen dem Messerbalken 6 und der unteren Schwenkachse 15 in einem flachen Winkel zum Boden verläuft. Für die Position der oberen Schwenkachse 16 des Tragelementes 13 ergibt sich der Vorteil, dass sich die obere Schwenkachse 16 geringfügig beabstandet hinter der als Band 7 ausgeführten Fördervorrichtung befindet, so dass sich das Band 7 auf seiner dem Grundrahmen 2 zugewandten Seite bei einer Ausgleichsbewegung nur geringfügig in horizontaler Richtung bewegt, wodurch die Führung des Bandes 7 in einer achsparallel zu der oberen Schwenkachse 16 verlaufenden und unmittelbar zu dieser benachbarten Nut 22 erheblich verbessert wird.

### Bezugszeichenliste:

- 1: Schneidwerk
- 2: Grundrahmen
- 3: Mittenabschnitt
- 4: Seitenabschnitt
- 5: Haspel
- 6: Messerbalken
- 7: Band
- 8: Einzugsschnecke
- 9: Bodenplatte
- 10: Vorsprung
- 11: Achse
- 12: Tragarm
- 13: Tragelement
- 14: Stützarm
- 15: untere Schwenkachse
- 16: obere Schwenkachse
- 17: Umlenkrolle
- 18: Rückwand
- 19: Profilelement
- 20: Profilelement
- 21: Querträger
- 22: Nut
- 23: Gleitkufe

## Patentansprüche

1. Schneidwerk (1) mit einem an einem Grundrahmen (2) angeordneten Mittenabschnitt (3) und mindestens zwei benachbart zu dem Mittenabschnitt (3) angeordneten Seitenabschnitten (4), die einen flexiblen Messerbalken (6) sowie zumindest eine hinter dem Messerbalken (6) angeordnete Fördervorrichtung (7) umfassen, die auf den jeweiligen Seitenabschnitten (4) als mindestens ein endloses Band (7) ausgeführt ist, das benachbart zu dem Mittenabschnitt (3) angeordnet ist, um von dem Messerbalken (6) abgeschnittenes Erntegut parallel zur Längsachse des Schneidwerkes (1) in Richtung des Mittenabschnittes (3) zu transportieren, wobei die Seitenabschnitte (4) eine Vielzahl von schwenkbar an dem Grundrahmen (2) angeordneten Tragarmen (12) aufweisen, die Tragarme (12) des jeweiligen Seitenabschnittes (4) den Messerbalken (6) tragen und wobei mindestens ein Tragelement (13) vorgesehen ist, welches das mindestens eine Band (7) trägt,
**dadurch gekennzeichnet,**
**dass**
bei einer vertikalen Auslenkung zumindest eines Tragarmes (12) dieser und das mindestens eine Tragelement (13) unabhängig voneinander bewegbar sind.

2. Schneidwerk (1) nach Anspruch 1, **dadurch gekennzeichnet, dass** die Tragarme (1) und das mindestens eine Tragelement (13) jeweils um separate Schwenkachsen (15, 16) schwenkbar am Grundrahmen (2) angelenkt sind.

3. Schneidwerk (1) nach einem der Ansprüche 1 oder 2, **dadurch gekennzeichnet, dass** das mindestens eine Tragelement (13) als eine Vielzahl von parallel zu den den Messerbalken (6) tragenden Tragarmen (12) angeordneten Stützarmen (14) ausgeführt ist.

4. Schneidwerk (1) nach einem der Ansprüche 1 oder 2, **dadurch gekennzeichnet, dass** das mindestens eine Tragelement (13) stabwerkartig ausgeführt ist.

5. Schneidwerk (1) nach Anspruch 4, **dadurch gekennzeichnet, dass** mindestens zwei Stützarme (14) eines Seitenabschnittes (4) durch mindestens einen Querträger (21) miteinander verbunden sind.

6. Schneidwerk (1) nach Anspruch 4, **dadurch gekennzeichnet, dass** eine Vielzahl von Querträgern (21) vorgesehen sind, die jeweils zumindest zwei benachbart nebeneinander angeordnete Stützarme (14) miteinander verbinden.

7. Schneidwerk (1) nach einem der Ansprüche 1 bis 6, **dadurch gekennzeichnet, dass** die Tragarme (12) Mittel zur Entlastung der von dem Messerbalken (6) auf den Boden ausgeübten Gewichtskraft aufweisen.

8. Schneidwerk (1) nach einem der Ansprüche 1 bis 7, **dadurch gekennzeichnet, dass** die Tragarme (12) und das mindestens eine Tragelement (13) durch zumindest ein Schubgelenk miteinander verbunden sind.

9. Schneidwerk (1) nach einem der Ansprüche 1 bis 8, **dadurch gekennzeichnet, dass** der Mittenabschnitt (3) eine Einzugsschnecke (8) sowie eine Bodenplatte (9) mit einem darauf angeordneten Leitelement (10) umfasst, wobei die Bodenplatte (9) schwenkbar an dem Grundrahmen (2) angeordnet ist.

10. Schneidwerk (1) nach einem der Ansprüche 1 bis 8, **dadurch gekennzeichnet, dass** der Mittenabschnitt (3) eine als Einzugsband ausgeführte Einzugsvorrichtung umfasst.

11. Schneidwerk (1) nach einem der Ansprüche 1 bis 10, **dadurch gekennzeichnet, dass** die Position der unteren Schwenkachse (15) des Tragarmes (12) unabhängig von der Position der oberen Schwenkachse (16) des mindestens einen Tragelementes (13) ist.

12. Schneidwerk (1) nach einem der Ansprüche 1 bis 11, **dadurch gekennzeichnet, dass** das mindestens eine Tragelement (13) eine zum Grundrahmen (2) achsparallel verlaufende Nut (22) aufweist, in die ein mit der Form der Nut (22) korrespondierender, umlaufender Vorsprung auf der Innenseite des Bandes (7) eingreift.

13. Schneidwerk (1) nach Anspruch 12, **dadurch gekennzeichnet, dass** die Nut (22) unmittelbar zu der oberen Schwenkachse (16) benachbart angeordnet ist.

14. Schneidwerk (1) nach Anspruch 12 oder 13, **dadurch gekennzeichnet, dass** die Nut (22) sich nahezu unterbrechungsfrei über die Breite des jeweiligen Seitenabschnittes (4) erstreckt.

## Claims

1. A cutting mechanism (1) comprising a central portion (3) arranged on a base frame (2) and at least two side portions (4) which are arranged adjacent to the central portion (3) and which include a flexible cutter bar (6) and at least one conveyor device (7) which is arranged behind the cutter bar (6) and which on the respective side portions (4) is in the form of at least one endless belt (7) arranged adjacent to the central portion (3) to transport crop material cut off by the cutter bar (6) parallel to the longitudinal axis of the cutting mechanism (1) in the direction of the central portion (3), wherein the side portions (4) have a plurality of support arms (12) arranged pivotably on the base frame (2), the support arms (12) of the respective side portion (4) carry the cutter bar (6) and wherein there is provided at least one support element (13) carrying the at least one belt (7),
**characterised in that**
upon a vertical deflection at least of one support arm (12) same and the at least one support element (13) are moveable independently of each other.

2. A cutting mechanism (1) according to claim 1 **characterised in that** the support arms (1) and the at least one support element (13) are respectively mounted to the base frame (2) pivotably about separate pivot axes (15, 16).

3. A cutting mechanism (1) according to one of claims 1 and 2 **characterised in that** the at least one support element (13) is in the form of a plurality of supporting arms (14) arranged parallel to the support arms (12) carrying the cutter bar (6).

4. A cutting mechanism (1) according to one of claims 1 and 2 **characterised in that** the at least one support element (13) is in the form of a framework-like structure.

5. A cutting mechanism (1) according to claim 4 **characterised in that** at least two supporting arms (14) of a side portion (4) are connected together by at least one transverse carrier (21).

6. A cutting mechanism (1) according to claim 4 **characterised in that** there are provided a plurality of transverse carriers (21) which respectively connect together at least two supporting arms (14) arranged adjacently one beside the other.

7. A cutting mechanism (1) according to one of claims 1 to 6 **characterised in that** the support arms (12) have means for relieving the load of the gravitational force exerted on the ground by the cutter bar (6).

8. A cutting mechanism (1) according to one of claims 1 to 7 **characterised in that** the support arms (12) and the at least one support element (13) are connected together by at least one sliding joint.

9. A cutting mechanism (1) according to one of claims 1 to 8 **characterised in that** the central portion (3) includes an intake auger (8) and a bottom plate (9) with a guide element (10) arranged thereon, wherein the bottom plate (9) is arranged pivotably on the base frame (2).

10. A cutting mechanism (1) according to one of claims 1 to 8 **characterised in that** the central portion (3) has an intake device in the form of an intake belt.

11. A cutting mechanism (1) according to one of claims 1 to 10 **characterised in that** the position of the lower pivot axis (15) of the support arm (12) is independent of the position of the upper pivot axis (16) of the at least one support element (13).

12. A cutting mechanism (1) according to one of claims 1 to 11 **characterised in that** the at least one support element (13) has a groove (22) which extends in axis-parallel relationship with the base frame (2) and into which engages a peripherally moving projection corresponding to the shape of the groove (22) on the inside of the belt (7).

13. A, cutting mechanism (1) according to claim 12 **characterised in that** the groove (22) is arranged immediately adjacent to the upper pivot axis (16).

14. A cutting mechanism (1) according to claim 12 or claim 13 **characterised in that** the groove (22) extends almost without any interruption over the width of the respective side portion (4).

## Revendications

1. Tablier de coupe (1) comportant une partie médiane (3) disposée sur un cadre de base (2) et au moins deux parties latérales (4) qui sont disposées de façon adjacente à la partie médiane (3) et qui comprennent une barre de coupe flexible (6) ainsi qu'au moins un dispositif de transport (7) disposée derrière la barre de coupe (6), lequel est réalisé sur les parties latérales (4) respectives sous la forme d'au moins une bande sans fin (7) disposée de façon adjacente à la partie médiane (3) pour transporter un produit de récolte, coupé par la barre de coupe (6), parallèlement à l'axe longitudinal du tablier de coupe (1) en direction de la partie médiane (3), les parties latérales (4) comportant une pluralité de bras porteurs (12) disposés à pivotement sur le cadre de base (2), les bras porteurs (12) de la partie latérale (4) respective portant la barre de coupe (6), et au moins un élément porteur (13) qui porte au moins une bande (7) étant prévu, **caractérisé en ce que**, lors d'un déplacement vertical d'au moins un bras porteur (12), celui-ci et ledit au moins un élément porteur (13) sont mobiles indépendamment l'un de l'autre.

2. Tablier de coupe (1) selon la revendication 1, **caractérisé en ce que** les bras porteurs (1) et ledit au moins un élément porteur (13) sont articulés à pivotement sur le cadre de base (2), chaque fois autour d'axes de pivotement (15, 16) séparés.

3. Tablier de coupe (1) selon l'une des revendications 1 ou 2, **caractérisé en ce que** ledit au moins un élément porteur (13) est réalisé sous la forme d'une pluralité de bras de support (14) disposés parallèlement aux bras porteurs (12) portant la barre de coupe (6).

4. Tablier de coupe (1) selon l'une des revendications 1 ou 2, **caractérisé en ce que** ledit au moins un élément porteur (13) est réalisé à la manière d'une structure à poutres.

5. Tablier de coupe (1) selon la revendication 4, **caractérisé en ce qu'**au moins deux bras de support (14) d'une partie latérale (4) sont reliés ensemble par au moins une barre transversale (21).

6. Tablier de coupe (1) selon la revendication 4, **caractérisé en ce qu'**il est prévu une pluralité de barres transversales (21) qui relient chaque fois au moins deux bras de support (14) disposés côte à côte de façon adjacente.

7. Tablier de coupe (1) selon l'une des revendications 1 à 6, **caractérisé en ce que** les bras porteurs (12) comportent des moyens pour alléger la force exercée par le poids de la barre de coupe (6) sur le sol.

8. Tablier de coupe (1) selon l'une des revendications 1 à 7, **caractérisé en ce que** les bras porteurs (12) et ledit au moins un élément porteur (13) sont reliés ensemble par au moins un point à glissière.

9. Tablier de coupe (1) selon l'une des revendications 1 à 8, **caractérisé en ce que** la partie médiane (3) comprend une vis d'alimentation (8) ainsi qu'une plaque de fond (9) avec un élément directeur (10) disposé à pivotement dessus, la plaque de fond (9) étant disposée sur le cadre de base (2).

10. Tablier de coupe (1) selon l'une des revendications 1 à 8, **caractérisé en ce que** la partie médiane (3) comprend un dispositif d'alimentation réalisé sous la forme d'une bande d'alimentation.

11. Tablier de coupe (1) selon l'une des revendications 1 à 10, **caractérisé, en ce que** la position de l'axe de pivotement inférieur (15) du bras porteur (12) est indépendante de la position de l'axe de pivotement supérieur (16) dudit au moins un élément porteur (13).

12. Tablier de coupe (1) selon l'une des revendications 1 à 11, **caractérisé en ce que** ledit au moins un élément porteur (13) comporte une rainure (22) qui s'étend parallèlement à l'axe du cadre de base (2) et dans laquelle s'engage une saillie périphérique, de forme correspondante à celle de la rainure (22), disposée sur la face intérieure de la bande (7).

13. Tablier de coupe (1) selon la revendication 12, **caractérisé en ce que** la rainure (22) est disposée de façon immédiatement adjacente à l'axe de pivotement supérieur (16).

14. Tablier de coupe (1) selon la revendication 12 ou 13, **caractérisé en ce que** la rainure (22) s'étend presque sans interruption sur la largeur de la partie latérale (4) respective.
